# EUROPEAN PATENT SPECIFICATION

(11) **EP 2 053 531 B1**
(45) Date of publication and mention of the grant of the patent: **30.07.2014**
(21) Application number: 07119680.2
(22) Date of filing: 30.10.2007
(51) Int. Cl.: G06F 21/00, H04L 29/06, H04W 12/06

(54) **Authentication certificate management for access to a wireless communication device**
Verwaltung von Authentifizierungszertifikaten für den Zugang zu einer drahtlosen Kommunikationsvorrichtung
Gestion de certificats d'authentification pour l'accès à un dispositif de communication sans fil

(30) Priority: 25.10.2007 US 982708 P
(43) Date of publication of application: 29.04.2009
(73) Proprietor: BlackBerry Limited, Waterloo, ON N2K 0A7 (CA)
(72) Inventor: Adams, Neil, Waterloo Ontario N2K 4E4 (CA); Little, Herb, Waterloo Ontario N2T 2V8 (CA); Brown, Michael K., Kitchener Ontario N2M 2Z2 (CA)
(74) Representative: Moore, Barry

(56) References cited:
- WO-A-03/079167
- US-A1- 2006 174 331
- SCHNEIER B: "Applied cryptography , ISO AUTHENTICATION FRAMEWORK" APPLIED CRYPTOGRAPHY. PROTOCOLS, ALGORITHMS, AND SOURCE CODE IN C, NEW YORK, JOHN WILEY & SONS, US, 1996, pages 574-576, XP002230325 ISBN: 0-471-11709-9
- ANONYMOUS: "BlackBerry with the S/MIME Support Package Version 4.0 User Guide Supplement" INTERNET CITATION, [Online] 16 November 2005 (2005-11-16), XP002410691 Retrieved from the Internet: URL:http://www.blackberry.com/knowledgecen terpublic/livelink.exe/fetch/20 00/8067/645045/8533/348781/1181993/S_MIME_ Support_Package_version_4.0 _User_Guide_Supplement?nodeid=1181919&vern um=0> [retrieved on 2006-12-07]
- "S/MIME Support Package" INTERNET CITATION, [Online] 2005, XP002373880 Retrieved from the Internet: URL:http://www.blackberry.com> [retrieved on 2006-03-23]
- HUNT R: "Technological infrastructure for PKI and digital certification" COMPUTER COMMUNICATIONS, ELSEVIER SCIENCE PUBLISHERS BV, AMSTERDAM, NL, vol. 24, no. 14, 15 September 2001 (2001-09-15), pages 1460-1471, XP004305776 ISSN: 0140-3664

## Description

The present invention relates generally to mobile devices, and in particular to systems, methods, and software for authentication certificate management for access to a wireless communication device.

User devices, including, but not restricted to, wireless mobile communication devices, personal computers, laptop or portable computers, smartphones, personal digital assistants (PDAs), and the like, may be secured from unauthorized access by means of an authentication process having one or more factors. Such a process may require the user to provide a smart card or other authorization token storing a secret value, which must be validated by the user device before the user is allowed to access the functions and/or data stores of the user device. It is known in the art to implement this type of authentication feature using a Public Key Infrastructure (PKI), wherein the user device is provided with a public key certificate, and the authentication token is provided with the corresponding private key. In order to authenticate the user with the authentication token, the authentication token signs a message using the private key that is transmitted to the user device for verification using the public key certificate.

Such digital certificates are issued by Certificate Authorities (CAs). The certificates expire after a given time, at which point the certificate is not intended to be relied on for authentication purposes. The expiration time may be embedded in the certificate itself, so the user device can ascertain whether the certificate has expired. However, the CA may revoke the certificate, in which case the certificate is intended to be unusable for authentication purposes. This information is not embedded in the certificate previously stored at the user device. Therefore, in order to determine whether a certificate may be relied on for authenticating a user, the user device must obtain the updated revocation status of the certificate when a user attempts to log into the device. In some PKI systems, an Online Certificate Status Protocol (OCSP) responder is provided, which is a dedicated server used to provide access to updated certificate status; the user device may query the OCSP responder over a network, for example over the Internet, in order to obtain updated revocation information before authenticating the user. Thus, if the user device is unable to query the OCSP for some reason, then the device will be unable to authenticate the user. In other systems, the user device must consult a Certificate Revocation List (CRL), which is a listing of all certificates in the system that had been revoked by the corresponding CA. The CRL typically evolves into a lengthy document over time, and in order to consult the list, the user device must download a copy over the network, or alternatively in response to a request from the user device, a proxy server on the user's network must download the appropriate CRL and respond to the user device once the CRL is received and checked. These processes delay the authentication process, and furthermore if the user device is unable to access a copy of a CRL to consult during the authentication process or is unable to contact the proxy server, then again the user device will be unable to authenticate the user. In the case of a wireless user device that may happen to be outside of radio coverage or may otherwise be unable to connect to a wireless gateway to the required network to contact the OCSP responder or obtain a CRL, the user will be locked out of his or her mobile device, even if he or she would be otherwise authorized to use the device, simply because no wireless network connection can be maintained.

US Patent Application Publication 2006/174331 describes a method for signing a user on to a computer system, whereby the user identifies himself by means of a certificate and is authenticated by means of sign-on data, and in which the sign-on data are determined in the computer system from the certificate.

Schneier, B., Applied Cryptography: Protocols, Algorithms, and Source Code in C (New York: John Wiley & Sons, 1996) at pages 574-576 describes an ISO Authentication Framework using a revocable X.509 certificate issued by a Certification Authority.

It is therefore desirable to provide an improved system and method to handle certificate status checking on a mobile device.

### General

The present teaching provides a method as detailed in claim 1. Also provided is a computer-readable medium in accordance with claim 13, a system according to claim 14, and a device according to claim 21. Advantageous features are provided in dependent claims.

In the embodiments described herein, a method for authenticating a user to a user device is provided, wherein the method may comprise: storing a status indicator and associated authentication information at the user device: automatically updating the status indicator on an intermittent basis when the user device is in communication with an authentication information status source while no user is currently authenticated to the user device:
verifying, using the authentication information stored at the user device, data received in association with a request for access to the user device and checking said stored and updated status indicator to determine whether the authentication information is valid; and
allowing access to the user device if the data received in association with the request for access is verified and said stored and updated status indicator indicates that the authentication information is valid. One aspect of this embodiment is that the act of updating the status indicator may comprise, if the user device is in communication with a network providing access to the authentication information status source, transmitting a request for status information for the authentication information to the authentication information status source; and if a response to the request comprising status information is received, updating the status indicator with the received status information. The authentication information may be a certificate.

In a further embodiment, an authentication system for a user device is provided, wherein the authentication system may comprise: means adapted for storing authentication information for authenticating the user to the user device and for storing a status indicator associated with the authentication information; means adapted for checking the status indicator stored in association with the authentication information; means adapted to automatically update the status indicator on an intermittent basis when the user device is in communication with an authentication information status source while no user is currently authenticated to the user device, said means being adapted to intermittently transmit a request for status information for the authentication information to an authentication information status source, receive a response comprising status information in response to the request, and update the stored status indicator with the received status information; and means adapted to allow access to the user device if data received in association with a received request for access is verified using the stored authentication information and said stored authentication information is determined to be valid by checking the stored and updated status indicator.

One embodiment comprises an updating module for transmitting a request for status information for the authentication information to a authentication information status source periodically at a first predetermined time interval, receiving a response comprising status information in response to the request, and updating the stored status indicator with the received status information. In a further aspect of the authentication system, the updating module may be configured to transmit a further request for status information at a further predetermined time interval if a response to a previous request is not received, wherein the further predetermined time interval is less than the first predetermined time interval.

In the foregoing embodiments, the updating of a status indicator may be repeated intermittently, for example at a first predetermined time interval, and if a response to a request for information regarding authentication information status is not received, the updating of the status indicator may be repeated at further time intervals that may be the same, or shorter or longer than the first predetermined time interval. Such further time intervals may be increased or decreased from the length of the first predetermined time interval. The further time interval may be a fraction of, or a multiple of the first predetermined time interval, although the further time interval may be set at an arbitrary value. For example, the further time interval may be less than half, half, double, or more than double, the first time interval. If a response to a repeated request is received, then further updating of the status indicator may be repeated again at the first predetermined time interval. If a response to a repeated request is not received, the updating of the status indicator may be repeated at the further time interval, or at yet a further time interval that is longer or shorter than the previous time interval. The authentication information or certificate may comprise public key data, and thus verifying data received in association with a request for access to the user device may comprise providing an authentication token storing private key data; transmitting a challenge to the authentication token; receiving from the authentication token a response comprising the challenge signed using the private key data; and verifying the response using the public key data, such that the user is authenticated if the response is verified and the status indicator indicates that the certificate comprising the public key data is valid. The authentication token may communicate via an authentication token access device; the authentication token or the access device, or both the authentication token and access device, may be separate from the user device. For access to the user device to be allowed, a user-entered password may also be verified.

### Brief Description of the Drawings

Embodiments of the inventive aspects of this disclosure will be best understood with reference to the following detailed description, when read in conjunction with the accompanying drawings, in which:

Figure 1 is a schematic diagram of an exemplary network topology, including certificate status sources, a mobile device, and a security token access device;

Figure 2 is a schematic representation of exemplary embodiments of the mobile device and the security token access device of Figure 1;

Figures 3a and 3b are flowcharts of methods of authenticating a user;

Figure 4 is a flowchart of a method of authenticating a user and updating the status of the authentication certificate; and

Figure 5 is a further schematic diagram of an exemplary wireless mobile communications device.

### Description of Preferred Embodiments

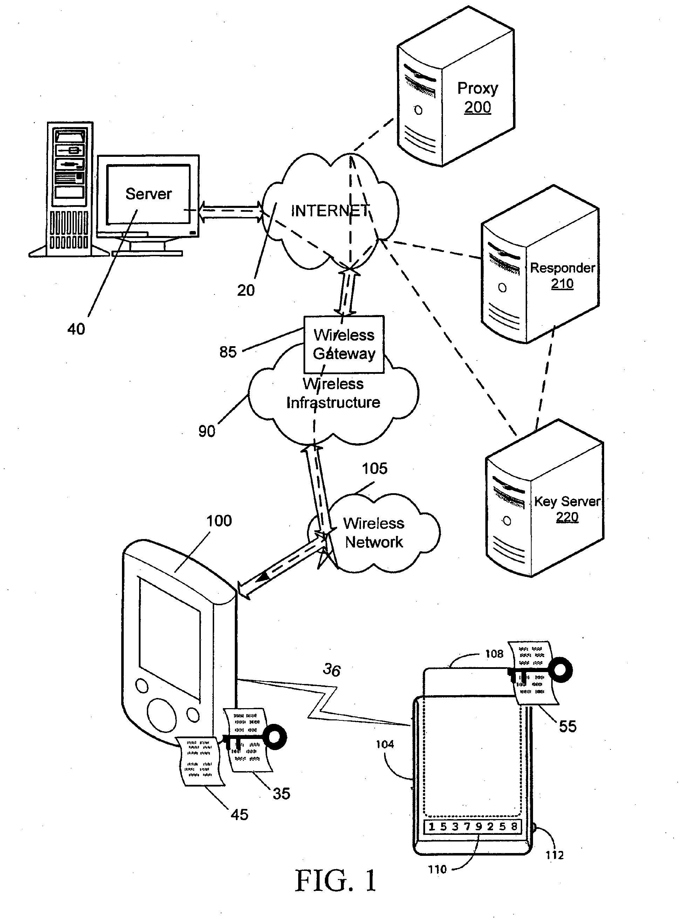

Referring to Figure 1, an overview of an exemplary system for use with the embodiments described below is shown. One skilled in the art will appreciate that there may be many different topologies, but the system shown in Figure 1 helps demonstrate the operation of the systems and methods described in the present application. For example, there may be many user devices connected to the system that are not shown in the simple overview of Figure 1.

Figure 1 shows a user device 100, which may comprise a mobile communication device. It will be appreciated by those skilled in the art that the mobile device may comprise any computing or communication device that is capable of connecting to a network by wireless means, including, but not limited, to personal computers (including tablet and laptop computers), personal digital assistants, smart phones, and the like. It will further be appreciated by those skilled in the art that these devices may be referred to herein as computing devices or communication devices, and may have principal functions directed to data or voice communication over a network, data storage or data processing, or the operation of personal or productivity applications; those skilled in the art will appreciate that terminology such as "mobile device", "communication device", "computing device", or "user device" may be used interchangeably.

The user device 100 may, for example, be connected to an Internet Service Provider on which a user of the system of Figure 1, likely the user associated with the user device 100 illustrated in Figure 1, has an account. The system of Figure 1 may be located within a company, possibly connected to a local area network, and connected to the Internet or to another wide area network, or connected to the Internet or other network through a large application service provider. Other features for network connectivity, such as the infrastructure of the local area network, Internet, wide area network, wireless gateway, and the like, are not shown in Figure 1 but are known to those having ordinary skill in the art. The user device 100 may be capable of sending and receiving messages and other data via wireless transmission, typically at a radio frequency (RF), from a base station in a wireless network to the user device. The particular network may be any wireless network over which messages may be exchanged with a user device such as the user device 100. The user device may receive data by other means, for example through a direct connection to a port provided on the user device such as a Universal Serial Bus (USB) link.

In accordance with various embodiments, the user device 100 is capable of communicating with a security token access device 104 over a wired or wireless communication link 36. In other embodiments, communication takes place over wireless communication link 36. A non-exhaustive list of examples of wireless local area network standards for wireless communication link 36 includes the Institute of Electrical and Electronic Engineers (IEEE) for Wireless LAN MAC and Physical layer (PHY) 802.11 a, b, g and n specifications or future related standards, the Bluetooth® standard, the Zigbee™ standard and the like. The security token access device 104 may comprise a reader device or a read-write device. Thus, for example, if the security token access device 104 is a read-write device, the access device 104 may be configured to not only read data from an associated security token, but to also write data to the security token. It will be appreciated by those skilled in the art that the systems and methods disclosed herein may incorporate a security token access device that is capable of both reading and writing to a security token, and that the embodiments described herein are not limited to a security token reader device.

A security token, here shown as a smart card 108, is shown inserted into the access device 104. Smart cards are personalized security devices, defined by the ISO7816 standard and its derivatives, as published by the International Organization for Standardization. A smart card may have a form factor of a credit card and may include a semiconductor device. The semiconductor device may include a memory that can be programmed with a secret key and with an authentication certificate, and may include a decryption engine, e.g., a processor and/or dedicated decryption logic. The smart card's functionality may be embedded in a device having a different form factor and being capable of communicating over an additional communication protocol, for example a USB device.

The security token 108 may include a connector for powering the semiconductor device and performing serial communication with an external device. The access device 104 may be provided in one of a number of form factors, including, but not limited to, a portable access device that can be worn on the person, for example by means of a lanyard (not shown) suspended around a user's neck. Alternatively, the access device 104 may be provided in a desktop reader or reader-writer form factor, or other form factor suitable for the security token environment that will be apparent to the skilled reader. In a further embodiment, the functionality of the security token 108 and the access device 104 may be integrated into a single unit.

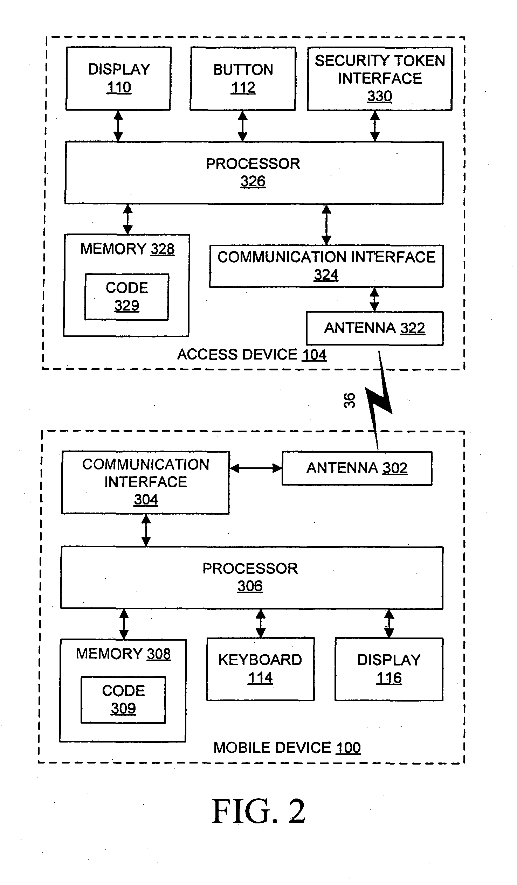

While the configuration of access devices 104 and user devices 100 will be generally appreciated by those skilled in the art, Figure 2 provides a schematic overview of select components of such devices. The access device 104 may comprise a processor 326, configured to execute code 329 stored in a memory element 328. The processor 326 and memory element 328 may be provided on a single application-specific integrated circuit, or the processor 326 and the memory element 328 may be provided in separate integrated circuits or other circuits configured to provide functionality for executing program instructions and storing program instructions and other data, respectively. The processor is connected to a security token interface 330. The memory 328 may comprise both volatile and non-volatile memory such as random access memory (RAM) and read-only memory (ROM); sensitive information, such as keys and personal identification numbers (PINs), may be stored in volatile memory.

The code 329 provided in the access device 104 may include operating system software, password verification code, and specific applications, which may be stored in non-volatile memory. For example the code 329 may comprise drivers for the access device 104 and code for managing the drivers and a protocol stack for communicating with the communications interface 324 which comprises a receiver and a transmitter (not shown) and is connected to an antenna 322.

The access device 104 may also be configured to interface with the user via the input means 112, such as a button for manipulation by the user, and via a display 110, such as a single-line readout for displaying strings of alphanumeric characters. The communications interface 324 may also comprise other processing means, such as a digital signal processor and local oscillators. If the access device 104 is separate from the user device 100, it may include a power supply (not shown), which in the case of a portable security token access device may be provided by at least one battery or power cell. The casing and the power supply of the access device 104 is configured such that removal of the casing disconnects the power supply, thereby clearing the volatile memory of the access device 104. The access device 104 may also be provided with a further output means, not shown, such as a light emitting diode (LED), which may be tri-coloured for indicating the status of the access device 104.

The user device 100 comprises an input means, for example a keyboard 114, although alternative or additional input means, such as thumbwheels, trackballs, touchpads, and buttons, may also be provided. The user device 100 also comprises an output means, such as a display 116; the user device 100 may also be provided with a speaker for non-visual communication, not shown. The input and output may be integrated, such as, for example, in a touchscreen display. The mobile device comprises an antenna 302 connected to a communication interface 304, which in turn communicates with a processor 306. The communication interface 304 may include similar components as the communication interface 324 of the access device 104, such as a digital signal processor, local oscillator, a receiver, and a transmitter. The processor 306 accesses a memory element 308 which stores code 309, which may include operating system software and application-specific software, as well as drivers and protocol stacks for handling communication over one or more communication links, such as the wireless communication link 36, as well as an authentication module for carrying out the various processes described below. The memory element 308 may include both volatile and non-volatile memory. The memory element 308 and the processor 306 may be provided in a single application-specific integrated circuit, or may be provided as separate components. The processor 306 may execute a number of applications that control basic operations, such as data and voice communications via the communication interface 304, as well as a personal information manager that may be installed during manufacture and e-mail client for composing, editing, digitally signing and encrypting, and digitally verifying and decrypting messages.

The user whose security information is stored on the security token 108 may use the access device 104 for identification and authentication to the user device 100, and optionally to digitally sign and/or decrypt messages sent or received by the user device 100. As one example, the user device 100 may be configured to send and receive e-mail, and may be configured to employ the Secure Multipurpose Internet Mail Extensions (S/MIME) protocol, such that e-mail messages received at the user device 100 are encrypted using a symmetric algorithm with a random session key generated by the sender of the e-mail message and encrypted by the recipient's (most likely the user device 100 user's) public key and sent with the message, and messages sent from the user device 100 are likewise encrypted with a random session key generated at the user device 100. Upon receipt of an encrypted e-mail message, the user device 100 may extract the encrypted session key and send it to the access device 104 via the communication link 36, which may be a secure communication link. The access device 104 then sends the encrypted session key to the security token 108, and the decryption engine of the security token 108 may decrypt the encrypted session key using the recipient's private decryption key, which is stored in the security token 108. The access device 104 retrieves the decrypted session key from the security token 108 and forwards it to the user device 100 via communication link 36 so that the user device can decrypt the received e-mail message. The security token 108 may prevent unauthorized use of the recipient's private decryption key by requiring that a password or personal identification number (PIN) be supplied at the user device 100 (and verified against a password or PIN stored at the security token 108 either in the clear or in an encoded form) before allowing the decryption operation to proceed. In the embodiments described herein, it will be understood by those skilled in the art that a password may comprise alphanumeric characters or other indicia, but may alternatively comprise only alphabetic characters or numeric characters; similarly, the PIN may comprise alphanumeric characters or other indicia, but may also alternatively comprise only alphabetic characters or numeric characters. Both a password and a PIN may be of any desired character length, according to the information technology policy or strength of protection desired. In the following embodiments, the selection of the format of password or PIN (e.g., the number of characters in length, and whether the password or PIN may comprise exclusively numeric characters, or may comprise other combinations of alphanumeric characters or other indicia) is a minor variation within the scope of these embodiments.

Similarly, to add a digital signature to an e-mail message or other message being sent by user device 100, the mobile device may send a hash of the contents of the message to the access device 104 over the communication link 36. The access device 104 passes the hash to the security token 108, which produces a digital signature from the hash and the sender's private signing key, which is stored in the security token 108. The security token 108 then passes the digital signature to the access device 104, which forwards it to the user device 100 via the communication link 36 so that the user device can transmit it along with the message to the appropriate messaging server. Again, the security token 108 may prevent unauthorized use of the sender's private signing key by requiring that a password or PIN, or both, be supplied before allowing the signing operation to proceed. A recipient of a message thus signed would procure a copy of the sender's public key certificate corresponding to the private signing key used to sign the message, and may verify the authenticity of the signed message using the public key and checking the status of the public key certificate to determine whether it is still valid and not revoked.

Further, the user device 100 may be configured to require user authentication before allowing the user to access some or all of the data stores or functionality of the user device 100. In accordance with various embodiments, two-factor authentication may be employed. In other embodiments, fewer or more than two factors may be employed. In two-factor authentication, the user must provide a token such as the security token 108 comprising authentication information associated with that user that is capable of verification by a third party, and in addition, the user is also required to enter a predetermined device password or other PIN using an input device on the user device 100. This device password may be stored in the clear in the non-volatile memory of the user device 100, or stored in a hashed, salted and hashed, or encrypted form in the device memory. If two-factor authentication is employed, then the user is authenticated to the user device 100 upon verification by the user device 100 of both the user-entered password and the response from the user-supplied authentication token 108. If the verification fails, then the user device 100 remains locked to the user. Again, the various algorithms by which a challenge may be issued, signed or encrypted, and verified, will be known to those skilled in the art.

In the two-factor authentication embodiment, both a device and security token password (or PIN) verification is required. Not only is the user asked to supply the security token 108 and enter a predetermined device password or PIN using an input device on the user device 100 that is verified at the mobile device, but the user is asked to enter a further password or PIN, for example via the input device of the user device 100, which is verified against a further password or further PIN stored either at the access device 104 or on the security token 108. This further password or further PIN may be stored at the access device 104 or security token 108 in the clear or in an obfuscated format (such as in a hashed, salted and hashed, or encrypted form). The verification of the further password or further PIN may be carried out at the same time as the verification of the response received from the security token. In a further one-factor authentication embodiment, the password or PIN verification at the user device 100 may be omitted, and the user is only authenticated using the supplied security token 108.

With reference to Figure 1, in accordance with various embodiments, authentication by an authentication token, such as a smart card, is enabled on the user device 100. The user device 100 is provided with authentication information such as an authentication certificate 35 comprising key data which is to be used for user authentication. The user device 100 may be supplied with a number of certificates stored in memory; for example, an authentication certificate 35 may be designated for use in verifying the user's identity at login, or when the user attempts to access certain functions or data on the user device 100. A further certificate stored at the user device 100 may be designated for use as a signing certificate (not shown) for signing or encrypting messages, as described above. Various asymmetric or elliptical key algorithms and the like, and the format and utilization of digital certificates for signing, verifying, encrypting or decrypting messages, or for verifying a user's identity, will be known to those skilled in the art. In the exemplary embodiment described here, the authentication information comprises an authentication certificate 35, which itself comprises a public key, likewise stored at the user device 100.

The authentication information may comprise security information associated with the user by a trusted issuing authority such as a CA, as will be understood by those skilled in the art; thus, in one embodiment the security token 108 stores a private key while a corresponding public key, typically associated with a digital certificate, may be made available to third parties and is provided to and stored at the user device 100.

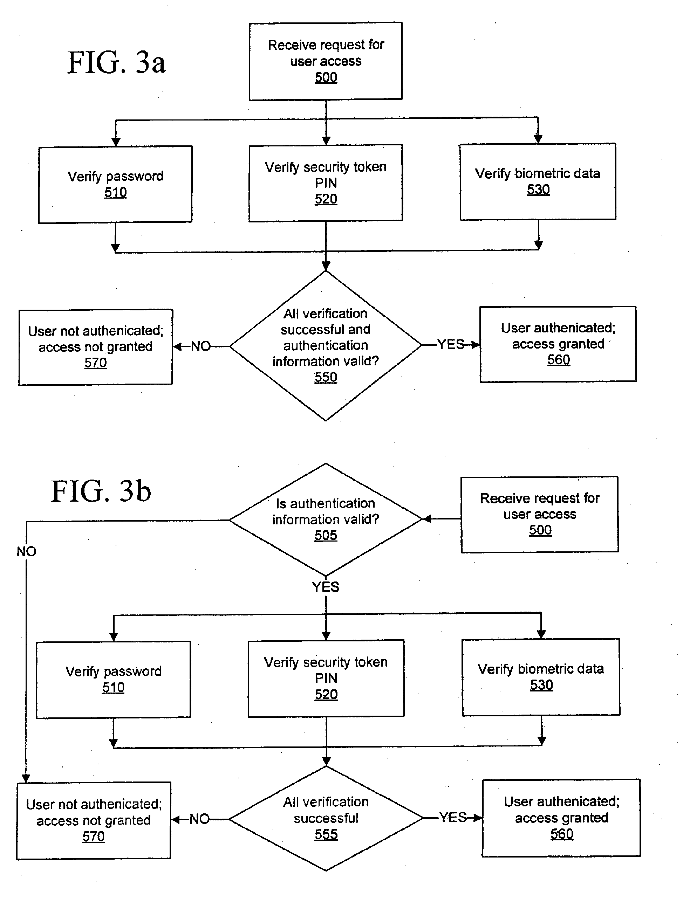

Turning to Figure 3a, the authentication process by which the user may gain access to the data stores and/or functions of the user device 100 will be described. At step 500, the user device 100 receives a request for user access. The form of this request will be understood by those skilled in the art; the request may be detected by detecting a keystroke or activation of an input means on the user device, or may be triggered by another event at the user device. In a two-factor authentication embodiment, the user device 100 then engages in two of the verification branches shown in Figure 3 a. In a two-factor authentication embodiment, a user-entered password (or PIN) is received and verified against a mobile device password (or PIN) at 510, such as in the manner described above. A determination is made as to whether each of these verifications was successful, and whether the authentication information stored at the security token, for example, a digital certificate, is valid, at 550. The manner of determining the validity of the authentication information is described in detail below. If the verification is successful and the authentication information is determined to be valid, then the user is authenticated to the user device 100 and access to the device's data stores and functions is granted at 560. Otherwise, the user is not authenticated and access is not granted at 570. The user may be offered another opportunity to gain access to the user device 100, not shown.

In a further two-factor authentication embodiment, in addition to the verification user device 100 password or PIN, a further PIN or password for the security token 108 is received and verified at 520. Thus, the user is authenticated and granted access at 560 only if both the password or PIN for each of the user device 100 and the security token 108 is verified, and if the authentication information is determined to be valid. In a three-factor authentication embodiment, an additional authentication process is executed at 530. In the example of Figure 3, biometric data is received from the user (for example, a fingerprint is detected and scanned), and compared against previously stored biometric data for an authenticated user. This previously stored biometric data may be stored on the network, for example at the server 40 or another server; it may be stored on the user device 100; it may be stored on the authentication token 108; or it may be stored on the access device 104. This biometric data may be stored in an obfuscated format, or it may be stored in the clear. The biometric data received from the user at 530 may be received via an input device on the user device 100, or it may be implemented at the access device 104 or security token 108, or in a further separate device in communication with the user device 100. The implementation of biometric scanning and verification will be understood by those skilled in the art. Thus, in the three-factor authentication embodiment, the user is authenticated and granted access at 560 only if (i) if both the password or PIN for each of the user device 100 and optionally of the security token 108, is verified; (ii) if the biometric data received from the user is verified; and (iii) if the authentication information is determined to be valid. It will be appreciated by those skilled in the art that not all of these verification processes 510, 520, 530 need be carried out; and indeed further verification processes, not shown, may also be carried out prior to granting user access to the user device 100. These verification processes may be implemented, effectively, in parallel-that is to say, each executed independently of each other-or in sequence, such that verification of one identifier (e.g., the biometric data, or the security token PIN or password, or the device password or PIN) must be successful before another identifier is verified.

A further embodiment is shown in Figure 3b, in which the validity of the authentication information is determined at 505 after a receipt of a request for user access at 500, but prior to the verification of other identifiers at 510, 520 or 530. If the authentication information, which is used to authenticate the security token 108 in the manner described in further detail below, is not valid, then the user is denied access at 570. If the authentication information is valid, then the other verification steps 510, 520, 530 (or a subset thereof) are carried out; if it is determined at 555 that each of the verifications that were carried out were successful, then the user is authenticated and access is granted to the user device 100 and its data stores and functions at 560; otherwise, user access is denied at 570. All of the processes and branches in Figures 3a and 3b may be executed by an authentication module resident on the user device 100, and, where applicable, with an authentication module resident at the security token 108 or access device 104 or at a separate device for receiving biometric data.

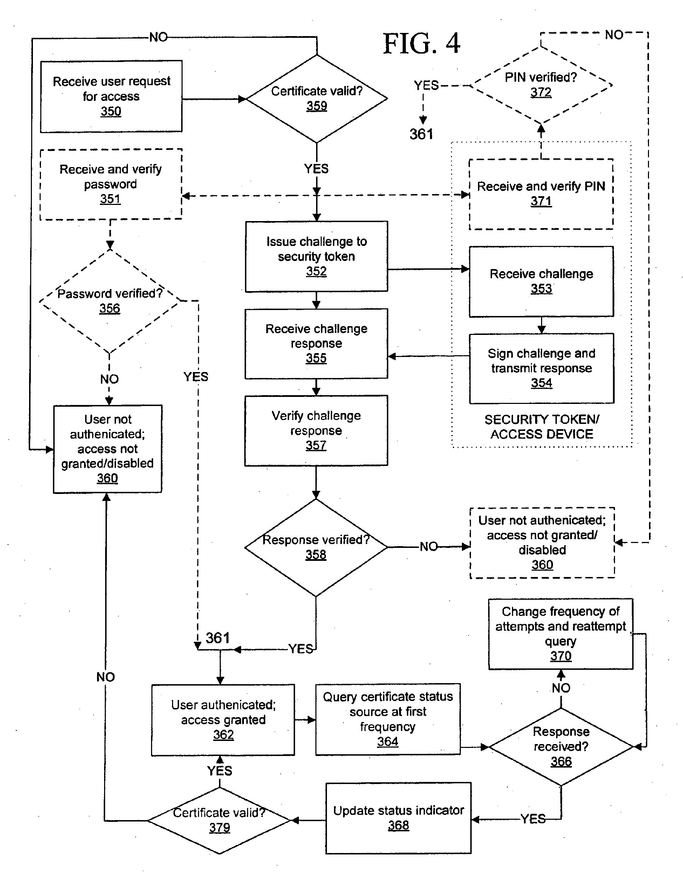

Figure 4 illustrates an embodiment such as that in Figure 3b, in which the validity of the authentication information, such as a digital certificate, is determined prior to the execution of other authentication processes. For simplicity, additional verification such as biometric data verification is not shown. A user request for access is received at the user device 100 at 350. The form of this request, as noted above, may be detected by detecting a keystroke or activation of an input means on the user device, or it may be triggered by another event at the user device. First, the validity of the authentication information (referred to in Figure 4 as a certificate) is determined at 359. If the certificate is not valid, then the user is not authenticated and access is denied at 360. If the certificate is determined to be valid, then three of the possible authentication branches are shown in Figure 4.

In a first branch, the user device 100 receives and verifies a password or PIN entered by the user at 351. The user-entered password or PIN may then be compared by the user device 100 to a previously stored password or PIN; if the previously stored password or PIN is in encrypted or hashed form, as noted above, then the user-entered password or PIN may first be hashed or encrypted and the result verified against the previously stored value to authenticate the user. Verification of the password or PIN may be carried out using any other process that will be apparent to those skilled in the art. If the user device 100 determines that the password or PIN is not verified at 356, then the user is not authenticated to the device 100, and is denied access to the functions and/or data stores of the device at 360. If the password or PIN is verified at 356, then the user device 100 awaits verification of other security factors at 361.

In a second branch, a PIN or password for accessing the security token 108 is received, for example via an input device on the user device 100. The PIN or password is verified against a value stored at the security token 108 at 371; this verification may take place at the security token 108 itself, or at the access device 104. If it is determined that the PIN or password is not verified at 372, then the user is not authenticated to the device 100, and is denied access to the functions and/or data stores of the device at 360. If the password or PIN is verified at 372, then the user device 100 awaits verification of other security factors at 361. As noted above, in another embodiment these two password or PIN authentication branch may be omitted; thus, in Figure 4, the steps relating to the password or PIN branches are shown in phantom. Furthermore, it will be appreciated by those skilled in the art that if two-factor authentication is employed, then the two branches (i.e., the password or PIN branch and the security token challenge-response branch) may be carried out either concurrently or consecutively. For example, the authentication module on the user device 100 may execute 351, 356, 371 and 372 first, before commencing 352, described below. Alternatively, the authentication module may execute the password or PIN branches only after the security token challenge-response branch, 352, 355, 357, and 358, are completed and the response is verified at 358. In a further alternative, the authentication module may execute the password or PIN branch while it awaits a response from the security token at 355, or execute the verification of the challenge response at 357 while it awaits a password or PIN from the user at 351 or 371.

In the security token challenge-response branch, the user device 100 issues a challenge to the authentication token 108 via the access device 104 over the wireless link 36, if communication between the access device 104 and the user device 100 is wireless, at 352. The challenge may be a randomly generated value or nonce which is temporarily stored in memory at the user device 100, or a hash of a value, which may be randomly generated, with other data. The authentication token 108 receives the challenge at 353 and prepares and transmits a response to the user device 100 at 354; the response may comprise the challenge, signed or encrypted using a private key 55 stored at the authentication token 108. Thus, in this embodiment, the request for access of step 350 is associated with authentication information to be verified. The receipt and verification of the security token PIN or password may be carried out at the same time; for example, the challenge transmitted to the authentication token 108 may also comprise the user-entered PIN or password that is to be verified against a PIN or password stored at the security token 108, and the response from the security token 108 may further comprise an indicator that the PIN or password was verified, or alternatively, the security token 108 may not return a correct response at 354 if the PIN or password is not verified. The user device 100, upon receipt of the response at 355, verifies the response using the public key data stored in association with the authentication certificate 35 at 357; if the response is verified at 358 (i.e. the user device 100 successfully extracts the original challenge value, or an expected value based on the challenge, from the response), and if the device password or PIN is verified at 356 and the security token PIN or password is verified at 372 (and if any other authentication identifiers, such as biometric data, are verified), then the user is authenticated to the user device 100 and is granted access to its functions and/or data stores at 362. Thus, it can be seen that in a two-factor authentication process if one of these three conditions -- verification of the password or PIN, verification of the response, and validity of the certificate 35 -- are not met, then the user is denied access to the user device at 360. The denial of access to the device, 360, may be determined at any time once one of these three conditions is determined to have failed; thus, a second 360 is also shown in Figure 4 in phantom as the consequence if the response fails to verify at 358 or 372, or after an attempt at verifying other authentication identifiers, not shown.

It will be appreciated by those skilled in the art that the foregoing process is only one example in which a request for access associated with authentication information, such as the authentication certificate 35, is presented to the user device 100. The granting of access to the device at 362 is contingent on the user device 100 successfully using the authentication information stored at the device 100 to verify data provided to the device 100 as a consequence of the request for access. Further, although not specifically depicted in Figure 4 it will be appreciated that the step of determining whether the certificate 35 is valid at 359 may be carried out later in the authentication process, although efficiencies may be realized by implementing the validity check 359 immediately after the receipt of a user request for access at 350; if the certificate is determined to be invalid at that point, then the other authentication branches need not be followed; the user will be denied access at 360. If the certificate 35 is determined to be valid, then the other authentication branches will proceed generally as described above. Alternatively, the validity determination at 359 may be carried out before the challenge response is verified at step 357, or determining the validity of the certificate 359 may be carried out at the same time as the verification of the challenge response 357; i.e., these two steps may be combined into the single "verify challenge response" process 357.

The validity of authentication information such as a certificate, meaning whether the authentication information should be relied on or not to authenticate the identity of the user presenting the authentication information may be determined by its expiration date and its revocation status. For example, authentication information such as a certificate may be provided with an embedded expiration date, the passing of which may be determined with reference to an internal clock by any device in possession of a replica of the certificate. In a further embodiment, the validity of the authentication information may be determined by one or more of its expiration date, revocation status, and trust status. Thus trust status is an indicator which indicates whether the authentication information is either inherently or explicitly trusted by the user device 100 or by the user's network. For example, trusted certificates may be explicitly trusted by storing them in a trusted key store at the user device 100, whereas untrusted certificates are stored elsewhere; alternatively, trusted certificates may be identified in a list or other data store, which may be consulted by an authentication module at the user device 100 whenever the trust status of a certificate is to be determined.

Furthermore, the certificate 35 may be a certificate in a chain of certificates. As will be understood by those skilled in the art, a certificate chain is a sequence of certificates in which each subsequent certificate is signed by the certificate preceding it in the chain. Thus, the validity of a certificate 35 may be verified not only with reference to the expiration date, revocation status, or trust status of the certificate 35 itself, but also with reference to the expiration date and revocation status of each of the certificates preceding the certificate 35 in the chain.

Unlike the expiration date, which may be embedded in the certificate itself, information relating to trust status and the revocation status is not; trust status indicia is typically stored on the user device 100 itself, although it may be stored elsewhere on the user device 100's network; revocation status of a certificate, however, is typically obtained from sources external to the user device 100. For example, turning back to Figure 1, the status of a certificate may be found in a certificate revocation list (CRL). While the certification authority that issued the certificate in the first place is typically the entity that may revoke the certificate, the server responsible for maintaining a CRL, or the server queried in order to determine the status of a given certificate, is not necessarily at the certification authority. For example, a CRL may be maintained at a key server 220. When the key server 220 receives a notification that a certificate has been revoked, it updates the CRL to reflect the revocation; it may then either "push" notifications and/or copies of the CRL to other points on the network, or it may simply allow other servers or devices on the network to access the CRL and "pull" the data from the key server 220. For example, a responder 210 may pull the CRL on a periodic basis from the key server 220. The responder 210, itself, receives queries from devices over the Internet 20 regarding the status of a given certificate, and transmits responses to those devices over the Internet 20 regarding the certificate status. Further, a proxy server 200 may be connected to the Internet 20, and may respond to requests regarding certificate status from other devices over the Internet 20. The proxy server 200 itself may maintain a cache of certificate status which it updates by querying the responder 210. The proxy server 200 may be incorporated into a user's home network, for example at a message server 40 or another server in that local network. Thus, to check the status of a certificate, a device generally must communicate over the wireless network 105 and the Internet 20 with a server in order to determine the status of the certificate.

However, it is desirable to avoid the delay incurred by obtaining information from a certificate status source such as the proxy server 200, responder 210, or key server 220. Further, if the user device 100 is unable to access the wireless network 105 or the Internet 20 when a user attempts to log in, in the prior art system of user authentication, the user device 100 would not be able to determine the status of the certificate 35, and therefore would not allow the user to authenticate him or herself to the device 100. The user would therefore remain locked out of the functions and/or data stores of the user device 100.

Thus, in accordance with various embodiments, the user device 100 stores in its non-volatile memory not only the authentication certificate 35 but also a status indicator 45. The status indicator 45 comprises status information for the authentication certificate 35. The status indicator may comprise a subset of a CRL or a response from a certificate status source such as the proxy server 200 or responder 210. The status indicator may further comprise a timestamp, representing the last time that the status indicator 45 had been refreshed in the memory of the user device 100, and optionally an identifier of the source of the certificate status, such as the key server 220, responder 210, or proxy server 200.

In various embodiments, the status represented in the status indicator 45 may be indicated as being "valid", "revoked", or "on hold." A status such as "on hold" may be a subcategory of "revoked"; if subcategories of "revoked" status are provided, then the status indicator may also comprise a reason code as well, which provides a further explanation why the certificate was revoked. The "on hold" status may mean that an administrator may have reason to believe that the private key 55 corresponding to the certificate 35 has been compromised for some reason. For example, the user may have reported that he or she had misplaced the security token 108, which may prompt an administrator to change the status of the certificate to "revoked" and/or "on hold". If the user had reported the security token 108 stolen, then the status indicator 45 would indicate "revoked" and the reason code may indicate "stolen", or may be blank. This status information may first be updated at the source CRL or other certificate status source, and would be updated at the user device 100 as described below. Other revocation reasons will be apparent to those skilled in the art. It will also be apparent that the certificate status need not literally comprise indicators such as "revoked" or "on hold"; the status indicator 45 may be encoded in any appropriate format. For example, the status indicator 45 may comprises numeric codes which may be interpreted by a human with reference to an established information technology policy for that user device 100.

Returning to Figure 4, when the user device 100 checks the validity of the certificate at 359, the device not only checks that the certificate 35 is not expired, but also checks the status indicator 45 stored at the user device 100 in order to determine whether the certificate 35 is valid. A "valid" certificate 35 is defined according to one or more of the expiration, revocation, and trusted status. For example, a valid certificate 35 may be considered to be one that is not expired and is not revoked (without any consideration of whether the certificate is explicitly or implicitly trusted). Alternatively, a valid certificate 35 may be defined to be a certificate that is at least one of not expired, not revoked, and trusted; or it may be a certificate that it as least two of not expired, not revoked, and trusted; or it may be a certificate that is not expired, not revoked, and trusted. In a further embodiment, a policy may be implemented at the user device 100 such that if the status indicator 45 indicates that the certificate 35 is revoked for a particular reason - for example, if the certificate 35 is "on hold" - the user device may still deem the certificate 35 to be valid until the status indicator 45 is updated to indicate that the certificate 35 is revoked for another reason, such as "stolen". Thus, as an example, a valid certificate may be defined as a certificate that is at least one of (i) not expired; and (ii) on hold or not revoked, and (iii) trusted; as a certificate that is at least two of the foregoing criteria; as a certificate that is all three of the foregoing criteria; or as a certificate that is both (i) not expired and (ii) on hold or not revoked. In still a further embodiment, while the user device 100 may be configured to authenticate the user with an "on hold" certificate, if the certificate is "on hold" rather than not revoked, the access granted to the user may be limited to access to only a subset of user data and functions on the device 100. For example, the user may only be permitted to make outgoing calls or send outgoing messages using the device 100, and many not be permitted to access the data stores or encrypted data until the certificate 35 status is updated in the status indicator 45 to be not revoked and unexpired. Alternatively, the user may only be permitted to access a message inbox or other personal information management data, provided the data is not stored in encrypted from on the user device 100. In yet a further embodiment, if the certificate 35 is part of a chain of certificates, then each of the certificates preceding the certificate 35 in the chain must also share the same characteristics as the certificate 35 (e.g., at least one of (i) on hold and not revoked, (ii) not expired, and (iii) trusted, or a combination of at least one or two of these criteria) for the certificate 35 to be valid. The definition of a valid certificate 35 will depend on the information technology policy implemented at the user device 100.

In accordance with various embodiments, the user device 100 is further configured to perform background updates of the status indicator 45. In Figure 4, even while the user is authenticated to the device, the user device 100 periodically queries the status of the certificate 35 at 364 by contacting a certificate status source, for example the responder 210 or the proxy 200, and querying the status of the certificate 35. This query may be made at the expiry of a first predetermined time interval, for example once every 60 minutes, or at another first predetermined time interval configurable at the user device 100 or in an information technology policy or other security rule provided to the user device 100. The user device may contact the key server 220 in order to obtain a copy of an updated CRL, although this would likely consume more bandwidth and be less desirable. The frequency at which the user device 100 transmits these queries is set at a first frequency that may be determined by an administrator, and for example established in an information technology policy implemented at the user device 100; this first frequency may be once a day or once an hour. If the user device 100 receives a response at 366, then the status indicator 45 is updated at the device 100 at 368, and a determination is made at 379 whether the certificate 35, which had been used to authenticate the user as described earlier, is still valid. If the certificate 35 is still valid according to the status indicator 45, the user access to the functions and/or data stores of the device 100 is maintained, and the user may not detect any interruption in his or her operation of the device. If the status indicator 45 indicates that the certificate 35 is now invalid because it is revoked, then the user's active session may terminate, and the authentication module may lock the user out of the user device 100 immediately at 360. In a further embodiment, the user device 100 may be configured to automatically delete user data, such as inbox messages, calendar, or personal information management data, if the certificate is revoked. However, if the status indicator 45 indicates that the certificate is merely "on hold", the user device 100 may be configured to offer the user the option to terminate the session and lock the device 100, or may provide the user with a warning that failure to remove the "on hold" status within a set period of time will result in termination of the session and locking out the user at 360.

During these repeated determinations of whether the certificate is valid at 359, it will be appreciated that the determination of validity may also comprise a check to determine whether the certificate is still unexpired, or whether each of the certificates in a chain of certificates including the certificate 35 is still determined to be valid. In one embodiment, if a certificate ceases to be valid because it is expired, but it is not revoked and is otherwise in good standing, the user is not immediately locked out of the user device 100; rather, the user device 100 is configured to allow the user's session to end at the user's discretion, but the next time the user attempts to log into the device if expiration is a criteria used to determine if a certificate is valid, the user may be locked out until a new certificate is supplied to the user device 100, or the now-expired certificate 35 is renewed.

If, however, a response is not received at 366 (a response may be deemed to have not been received if a predetermined timeout occurs or if the response comprises an error, for example) then the user device 100 repeats its query to the certificate status source at 370. There are many reasons why a response may not be received; the responder 210 or the proxy server 200 may be down, or the user device, if wireless, may be unable to access the wireless gateway 105, or even if the wireless gateway 105 is accessible, contact with the certificate status source through the Internet 20 may fail. Therefore, the user device 100 attempts to repeat the query at 370 until a response is received at 366. The time interval before subsequent queries may vary until a response is received at 366. After a first error is received or a first predetermined timeout occurs, the query may be repeated after a first time interval, for example 5 minutes. If an error is again received or if a predetermined timeout again occurs, the query may be repeated after a second, longer time interval, for example 10 minutes. Upon subsequent errors or timeouts, the time interval before a further query may be increased until a response is received; in this embodiment, the time interval may be increased until the interval reaches the first predetermined time interval. For example, if the first predetermined time interval is 60 minutes, when repeated errors are received or repeated timeouts occur in response to the user device 100's certificate status queries, the user device 100 may attempt to repeat the query after 5 minutes, 10 minutes, 20 minutes, and 40 minutes, and then after 60 minute intervals thereafter. Thus, in this embodiment, if the conditions giving rise to the first error received or first timeout detected by the user device 100 are only temporary, by making the initial reattempts at shorter intervals, a successful result to the reattempted query will be realized sooner; if the conditions giving rise to the receipt of an error or detection of a timeout at the user device 100 persist, then subsequent attempts to query the certificate status are made at longer intervals until the first predetermined time interval is reached.

In a further embodiment, with each failed attempt to receive a response, the time interval before the next query attempt is reduced. In other words, the request attempts are made at 370 with decreasing time intervals until a predetermined minimum time interval is reached. For example, if the first predetermined time interval is once per hour, if a first query fails, the first query attempt may be made 30 minutes later; if the first query attempt fails, then the second query attempt may be made 15 minutes later; and if the second query attempt fails, then the third query attempt may be made 5 minutes later; but if the third query attempt fails, subsequent query attempts are still made at 5 minute intervals. Once a query attempt succeeds and a response is received at 366, the time interval at which queries are made returns to the first predetermined time interval.

In addition, the user device 100 may also be configured to allow the user to force a status indicator 45 update at any time, rather than wait for the next scheduled update attempt.

It will be appreciated that the background update procedure commencing at 364 of Figure 4 may be executed by the user device 100, even if the user is not currently authenticated to the device. In that case, of course, there is no need to terminate a user's access to the device in the event the status indicator 45 is updated to indicate that the certificate 35 designated for use as the authentication certificate is revoked.

Thus, it can be seen that even if the user device 100 is unable to connect to a network over a wireless gateway and is unable to determine the current status of the digital certificate 35 from a source on the network, the user will still be able to log in to the user device 100 depending on the certificate status information stored in the local status copy on the user device 100. In various embodiments, the user device 100 refers to the local status copy during the authentication process, whether the user device 100 is able to connect wirelessly to a network or not. This enhances the user experience since the likelihood of delay during login and the likelihood that a legitimate user will be locked out due to a lack of radio coverage is reduced.

As noted above, the user device 100 may store a number of certificates. In various embodiments, background updating of the status indicator 45 for a certificate is only carried out for a single certificate, namely, the certificate designated as the one to be used in authenticating a user to the device. In further embodiments, the user device 100 may carry out the background update process for more than one certificate using the same or a different update schedule; for example, while the status indicator 45 for the authentication certificate 35 is updated hourly, the status indicator for a sender's public key certificate stored at the user device 100 and used to verify the authenticity of a signed message received at the user device 100 may be updated only daily, while the status indicator for a further, private key certificate used by the user to digitally sign his or her own messages to be sent from the user device 100 may be updated only weekly. If the certificate 35 is a certificate in a chain of certificates, then the user device 100 may store the certificates preceding the certificate 35 in its chain; thus, in addition to carrying out the background update process to update the status indicator 45 for the certificate 35, the user device may carry out the background update process and update the status indicators corresponding to each of the certificates preceding the certificate 35 in the chain as well. If a status indicator at the user device 100 for each of the certificates in the chain indicates that the certificate is "valid", then provided the status of the certificate 35 itself permits the user to access some or all of the functions and data on the user device 100, the user will be provided such access. If the status indicator for one of the certificates in the chain, besides the certificate 35 itself, indicates that the certificate in the chain is "revoked", then the user may be denied access to the functions or data on the user device 100. As noted above, the determination of whether each of the certificates in the chain is valid may be made in the same manner as the determination of the validity of the certificate 35. The determination of whether each of the certificates in the chain is valid may be carried out according to different criteria; for example, the certificate 35 may be determined to be valid if it is at least one of (i) on hold or not revoked, (ii) not expired, and (iii) trusted, whereas the other certificates in the chain may be deemed to be valid if they are at least (i) not revoked and (ii) not explicitly untrusted. Any combination of these criteria may be applied in variations of the embodiments described herein.

In yet a further embodiment, each time the validity of the certificate is checked at 359, the age of the status indicator 45 is also verified to ensure that it has not aged beyond a predetermined threshold, for example one week. If the status indicator 45 comprises a timestamp that is older than a predetermined threshold, then the certificate may be deemed invalid even though the certificate is, otherwise, unexpired and not revoked, according to the status indicator 45.

Optionally, the above system and method for authenticating a user with reference to the status indicator 45 may be employed only when the user device 100 is unable to connect to a wireless network, either because it is outside of radio coverage or the radio in the device is turned off. If the user device 100 is able to connect to a wireless network, then upon user request for access, the user device 100 attempts to obtain updated status information from a certificate status source such as the responder 210 or the proxy server 200. In yet another embodiment, the ability to use the locally cached certificate status in the status indicator 45 is reserved only for the certificate 35 designated as the certificate for use in authenticating a user to the user device 100; for all other certificates, such as those used for signing messages, the user device 100 must obtain updated status information from a certificate status source such as the responder 210 or the proxy server 200.

Thus, the foregoing embodiments provide a method for managing secure access to a wireless communication device, the method comprising receiving a request to authenticate a security token; determining, using authentication certificate status information, whether an authentication certificate is revoked, wherein the authentication certificate comprises public key data and wherein both the authentication certificate and the authentication certificate status information are locally stored at the wireless communication device; authenticating the security token using the locally stored authentication certificate if the locally stored authentication certificate is determined to be not revoked; and requesting authentication certificate status information from a remotely located certificate status source via a wireless communication link, wherein the act of requesting authentication certificate status information is automatically performed periodically according to a predetermined time interval. The foregoing embodiments further provide the above method, further comprising decreasing the time interval if the wireless communication link fails, and still further comprising repeatedly increasing the time interval up to a maximum if the wireless communication link fails after decreasing the time interval. Repeatedly increasing the time interval may comprise doubling the time interval. Further, if the wireless communication link fails after repeatedly increasing the time interval, the embodiments may further comprise resetting the time interval to its original predetermined value. The embodiments may also provide for erasing user data from the wireless communication device, if the authentication certificate is determined to be revoked.

The foregoing embodiments further provide the above method, further comprising that if the authentication certificate is determined to be on hold, requesting authentication certificate status information from the remotely located certificate status source via the wireless communication link, in response to a user-initiated request for status update, or still further comprising granting access to user data and functions on the wireless communication device after authenticating the security token using the locally stored authentication certificate if the locally stored authentication certificate is determined to be not revoked. The foregoing embodiments may also provide that the act of requesting authentication certificate status information from a remotely located certificate status source is not automatically performed in response to receiving the request to authenticate the security token, or that granting access to user data and functions comprises granting access to a subset of user data and functions on the wireless communication device if the locally stored authentication certificate is determined to be on hold. Still further, the foregoing embodiments may further comprise, if the locally stored authentication certificate is determined to be revoked once access is granted to the user data and functions on the wireless communication device, terminating said access; or may further comprise the act of verifying a user-entered password, and wherein the act of granting access to user data and functions comprises granting said access if the user-entered password is verified.

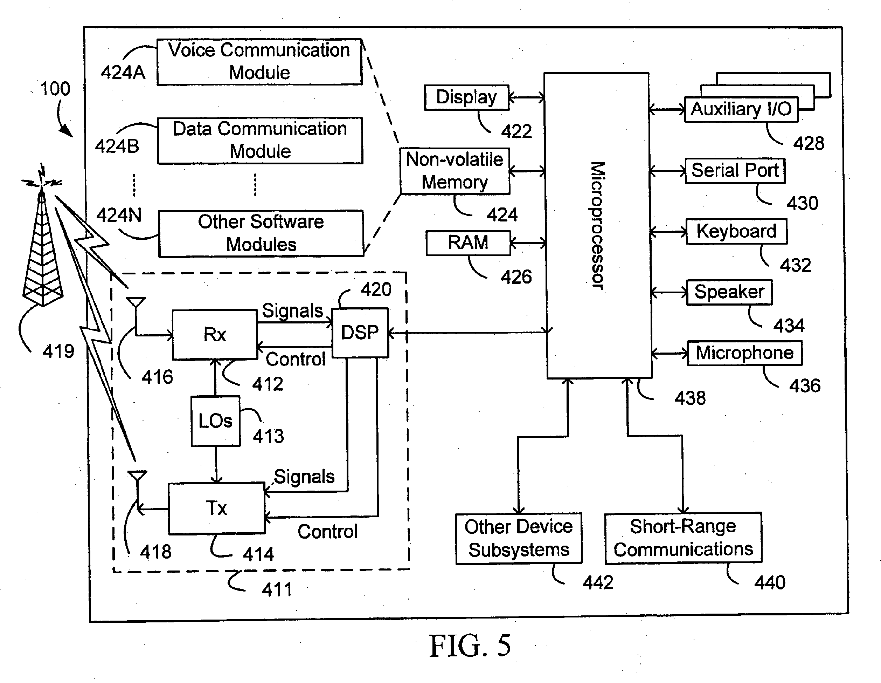

As another example, the systems and methods disclosed herein may be used with many different computers and devices, such as a further wireless mobile communications device 100 shown in Figure 5. With reference to Figure 5, the user device 100 is a dual-mode mobile device and includes a transceiver 411, a microprocessor 438, a display 422, non-volatile memory 424, random access memory (RAM) 426, one or more auxiliary input/output (I/O) devices 428, a serial port 430, a keyboard 432, a speaker 434, a microphone 436, a short-range wireless communications sub-system 440, and other device sub-systems 442.

The user device 100 may be a two-way communication device having voice and data communication capabilities. Thus, for example, the user device 100 may communicate over a voice network, such as any of the analog or digital cellular networks, and may also communicate over a data network. These voice and data networks 419 may be separate communication networks using separate infrastructure, such as base stations, network controllers, etc., or they may be integrated into a single wireless network.

The transceiver 411 includes a receiver 412, a transmitter 414, antennas 416 and 418, one or more local oscillators 413, and a digital signal processor (DSP) 420. The antennas 416 and 418 may be antenna elements of a multiple-element antenna, and may be embedded antennas. However, the systems and methods described herein are in no way restricted to a particular type of antenna, or even to wireless communication devices. In one embodiment, the DSP 420 is used to send and receive signals to and from the antennas 416 and 418, and also provides control information to the receiver 412 and the transmitter 414. If the voice and data communications occur at a single frequency, or closely-spaced sets of frequencies, then a single local oscillator 413 may be used in conjunction with the receiver 412 and the transmitter 414. Alternatively, if different frequencies are utilized for voice communications versus data communications for example, then a plurality of local oscillators 413 can be used to generate a plurality of frequencies corresponding to the voice and data networks 419. Information, which includes both voice and data information, is communicated to and from the transceiver 411 via a link between the DSP 420 and the microprocessor 438.

The detailed design of the transceiver 411, such as frequency band, component selection, power level, etc., will be dependent upon the voice and data networks 419 in which the user device 100 is intended to operate. The voice and data networks 419 may be separate voice networks and separate data networks, or may comprise integrated voice and data networks. It will be appreciated by those skilled in the art that these embodiments may be implemented on a variety of voice and data networks 419, including, but not limited to, 2G, 2.5G, 3G, 4G, and other voice and data networks, such as GSM, CDMA2000, GPRS, EDGE, W-CDMA (UMTS), FOMA, EV-DO, TD-SCDMA, HSPA, HSOPA, and the like.

Depending upon the type of network or networks 419, the access requirements for the user device 100 may also vary. For example, in GPRS data networks, network access is associated with a subscriber or user of a mobile device. A GPRS device typically requires a subscriber identity module ("SIM"), which is required in order to operate a mobile device on a GPRS network. Local or non-network communication functions (if any) may be operable, without the SIM device, but a mobile device will be unable to carry out any functions involving communications over the voice and data networks 419, other than any legally required operations, such as '911' emergency calling.

After any required network registration or activation procedures have been completed, the user device 100 may then send and receive communication signals, including both voice and data signals, over the voice and networks 419. Signals received by the antenna 416 from the voice and data networks 419 are routed to the receiver 412, which provides for signal amplification, frequency down conversion, filtering, channel selection, etc., and may also provide analog to digital conversion. Analog to digital conversion of the received signal allows more complex communication functions, such as digital demodulation and decoding to be performed using the DSP 420. In a similar manner, signals to be transmitted to the voice and data networks 419 are processed, including modulation and encoding, for example, by the DSP 420 and are then provided to the transmitter 414 for digital to analog conversion, frequency up conversion, filtering, amplification and transmission to the voice and data networks 419 via the antenna 418.

In addition to processing the communication signals, the DSP 420 also provides for transceiver control. For example, the gain levels applied to communication signals in the receiver 412 and the transmitter 414 may be adaptively controlled through automatic gain control algorithms implemented in the DSP 420. Other transceiver control algorithms could also be implemented in the DSP 420 in order to provide more sophisticated control of the transceiver 411.

The microprocessor 438 manages and controls the overall operation of the user device 100. Many types of microprocessors or microcontrollers could be used here, or, alternatively, a single DSP 420 could be used to carry out the functions of the microprocessor 438. Low-level communication functions, including at least data and voice communications, are performed through the DSP 420 in the transceiver 411. Other, high-level communication applications, such as a voice communication application 424A, and a data communication application 424B may be stored in the non-volatile memory 424 for execution by the microprocessor 438. For example, the voice communication module 424A may provide a high-level user interface operable to transmit and receive voice calls between the user device 100 and a plurality of other voice or dual-mode devices via the voice and data networks 419. Similarly, the data communication module 424B may provide a high-level user interface operable for sending and receiving data, such as e-mail messages, files, organizer information, short text messages, etc., between the user device 100 and a plurality of other data devices via the voice and data networks 419. The microprocessor 438 also interacts with other device subsystems, such as the display 422, the RAM 426, the auxiliary input/output (I/O) subsystems 428, the serial port 430, the keyboard 432, the speaker 434, the microphone 436, the short-range communications subsystem 440 and any other device subsystems generally designated as 442.

Some of the subsystems shown in Figure 5 perform communication-related functions, whereas other subsystems may provide "resident" or on-device functions. Notably, some subsystems, such as the keyboard 432 and the display 422 may be used for both communication-related functions, such as entering a text message for transmission over a data communication network, and device-resident functions such as a calculator or task list or other PDA type functions.

Operating system software used by the microprocessor 438 may be stored in a persistent store such as non-volatile memory 424. The non-volatile memory 424 may be implemented, for example, as a Flash memory component, or as battery backed-up RAM. In addition to the operating system, which controls low-level functions of the mobile device 410, the non-volatile memory 424 includes a plurality of software modules 424A-424N that can be executed by the microprocessor 438 (and/or the DSP 420), including a voice communication module 424A, a data communication module 424B, and a plurality of other operational modules 424N for carrying out a plurality of other functions. These modules are executed by the microprocessor 438 and provide a high-level interface between a user and the user device 100. This interface typically includes a graphical component provided through the display 422, and an input/output component provided through the auxiliary I/O 428, keyboard 432, speaker 434, and microphone 436. The operating system, specific device applications or modules, or parts thereof, may be temporarily loaded into a volatile store, such as RAM 426 for faster operation. Moreover, received communication signals may also be temporarily stored to RAM 426, before permanently writing them to a file system located in a persistent store such as the Flash memory 424.

The non-volatile memory 424 may provide a file system to facilitate storage of PIM data items on the device. The PIM application may include the ability to send and receive data items, either by itself, or in conjunction with the voice and data communication modules 424A, 424B, via the voice and data networks 419. The PIM data items may be seamlessly integrated, synchronized and updated, via the voice and data networks 419, with a corresponding set of data items stored or associated with a host computer system, thereby creating a mirrored system for data items associated with a particular user.

Context objects representing at least partially decoded data items, as well as fully decoded data items, may be stored on the user device 100 in a volatile and non-persistent store such as the RAM 426. Such information may instead be stored in the non-volatile memory 424, for example, when storage intervals are relatively short, such that the information is removed from memory soon after it is stored. However, in one embodiment, this information is stored in the RAM 426 or another volatile and non-persistent store to ensure that the information is erased from memory when the user device 100 loses power. This prevents an unauthorized party from obtaining any stored decoded or partially decoded information by removing a memory chip from the user device 100, for example.

The user device 100 may be manually synchronized with a host system by placing the device 100 in an interface cradle, which couples the serial port 430 of the user device 100 to the serial port of a computer system or device. The serial port 430 may also be used to enable a user to set preferences through an external device or software application, or to download other application modules 324N for installation. This wired download path may be used to load an encryption key onto the device, which is a more secure method than exchanging encryption information via the wireless network 419.

A short-range communications subsystem 440 may also be included in the user device 100. The subsystem 440 may include an infrared device and associated circuits and components, or a short-range RF communication module such as a Bluetooth® module or an 802.11 module, for example, to provide for communication with similarly-enabled systems and devices.

The systems and methods disclosed herein are presented only by way of example and are not meant to limit the scope of the invention. Other variations of the systems and methods described above will be apparent to those skilled in the art and as such are considered to be within the scope of the invention. For example, it should be understood that steps and the order of the steps in the processing described herein may be altered, modified and/or augmented, or that said steps may be carried out by software and/or hardware modules designed for such purpose, and still achieve the desired outcome.

The systems' and methods' data may be stored in one or more data stores. The data stores can be of many different types of storage devices and programming constructs, such as RAM, ROM, Flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code.

Various embodiments of the present invention having been thus described in detail by way of example, it will be apparent to those skilled in the art that variations and modifications may be made without departing from the invention. The invention includes all such variations and modifications as fall within the scope of the appended claims.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

## Claims

1. A method for authenticating a user to a user device (100), the method comprising:
storing authentication information (35) and a status indicator (45) for a validity of said authentication information (35) at the user device;
automatically updating the status indicator (45) on an intermittent basis while the user device (100) is in communication with a network (20) providing access to an authentication information status source (200, 210, 220);
while the user device (100) is not in communication with the network (20) providing access to the authentication information status source,
verifying, using the authentication information (35) stored at the user device, data received in association with a request for access to the user device and checking said stored and updated status indicator (45) to determine whether the authentication information is valid; and
allowing access to the user device (100) if the data received in association with the request for access is verified and said stored status indicator (45), last updated when the user device (100) was in communication with the network (20), indicates that the authentication information (35) is valid.

2. The method of claim 1, wherein the authentication information (35) is a certificate.

3. The method of any one of the preceding claims, wherein automatically updating the status indicator (45) further comprises:
transmitting a request for status information for the authentication information (35) to the authentication information status source (200, 210, 220); and
if a response to the request comprising status information is received, updating the status indicator (45) with the received status information.

4. The method of claim 3, wherein updating the status indicator (45) is repeated periodically at a first time interval.

5. The method of claim 4, wherein updating the status indicator (45) further comprises the step of:
if a response to the request for status information is not received, decreasing the time interval each time a response to a request is not received to a predetermined minimum time interval.

6. The method of claim 5, wherein if a response to the request for status information is received while the updating of the status indicator (45) is being repeated at a time interval other than the first time interval, increasing the time interval at which said updating is periodically repeated to the first time interval.

7. The method of any one of claims 3 to 6, further comprising:
if the user device (100) is not in communication with the network (20) providing access to the authentication information status source (200, 210, 220),
attempting to transmit a request for status information (45) for the authentication information (35) to the authentication information status source (200, 210, 220) at time intervals decreasing to a predetermined minimum time interval until a response to the request for status information is received.

8. The method of any one of the preceding claims, wherein the authentication information (35) comprises public key data, and authenticating a user using the authentication information (35) stored at the user device (100) further comprises:
providing an authentication token means (108) storing private key data (55);
transmitting to the authentication token means (108) a challenge;
receiving from the authentication token means (108), a response comprising the challenge signed using the private key data (55); and
verifying the response using the public key data, such that the user is authenticated if the response is verified.

9. The method of claim 8, wherein transmitting to and receiving from the authentication token means (108) are executed using an access means (104) in communication with the user device (100) and the authentication token means (108), wherein the access means (104) is separate from the user device.

10. The method of any one of the preceding claims wherein the step of updating is repeated after allowing access to the user device, wherein if the status indicator (45) is updated to indicate that the authentication information (35) used to authenticate a user is not valid, locking the user device to prevent user access (100).

11. The method of any one of the preceding claims, wherein the authentication information (35) is valid if it is at least one of: (i) not expired; (ii) either on hold or not revoked; and (iii) trusted.

12. The method of any one of the preceding claims, wherein the user device (100) is a wireless communication device.

13. A computer-readable medium comprising code executable by a computing device for causing said computing device to carry out the method of any one of the preceding claims.

14. An authentication system for a user device (100), the authentication system comprising:
means (306, 309) adapted for storing authentication information (35) for authenticating the user to the user device (100) and for storing a status indicator (45) for a validity of said authentication information;
means (306, 309) adapted for checking the status indicator (45) stored in association with the authentication information;
means adapted to automatically update the status indicator (45) on an intermittent basis while the user device (100) is in communication with a network (20) providing access to an authentication information status source (200, 210, 220), said means being adapted to intermittently transmit a request for status information for the authentication information to an authentication information status source, receive a response comprising status information in response to the request, and update the stored status indicator with the received status information; and
means (306, 309) adapted to allow access to the user device (100) if data received in association with a received request for access is verified using the stored authentication information and said stored authentication information is determined to be valid by checking the stored status indicator (45), last updated when the mobile device was in communication with the network (20).

15. The authentication system of claim 14, wherein the authentication information (35) is a certificate.

16. The authentication system of either claim 14 or claim 15, wherein requests for status information are periodically transmitted at the expiry of a first time interval while a response is received for each request, and further comprising means adapted to decrease the time interval at which requests are transmitted each time a response to a request status information is not received to a predetermined minimum time interval, and to increase the time interval to the first time interval once a response is received.

17. The authentication system of any one of claims 14 to 16, further comprising means adapted to lock the user device to prevent user access if the stored status indicator is updated to indicate that the authentication information used to authenticate the user is not valid.

18. The authentication system of any one of claims 14 to 17, further comprising means adapted to issue a user-invoked request for status information for the authentication information to the authentication information status source.

19. The authentication system of any one of claims 14 to 18, wherein the authentication information is valid if it is at least one of: (i) not expired; (ii) either on hold or not revoked; and (iii) trusted.

20. The authentication system of any one of claims 14 to 19, wherein the authentication information (35) comprises public key data, and the means (306, 309) adapted to allow access is further adapted to transmit a challenge to an authentication token means (108), to receive from the authentication token means a response comprising the challenge signed using private key data (55) stored at the authentication token means, and to verify the response using the public key data, such that the user is authenticated if the response is verified and the status indicator indicates that the authentication information comprising the public key data is valid.

21. A wireless communication device comprising the authentication system of any one of claims 14 to 20.

## Patentansprüche

1. Verfahren zum Authentifizieren eines Benutzers einer Benutzervorrichtung (100), wobei das Verfahren Folgendes aufweist:
Speichern von Authentifizierungsinformation (35) und einer Statusangabe (45) für eine Gültigkeit der Authentifizierungsinformation (35) an der Benutzervorrichtung,
automatisches Aktualisieren der Statusangabe (45) auf intermittierender Basis, während die Benutzervorrichtung (100) in Kommunikation mit einem Netz (20) ist, das einen Zugriff auf eine Authentifizierungsinformationsstatusquelle (200, 210, 220) bereitstellt,
Bereitstellen des Zugriffs auf die Authentifizierungsinformationsstatusquelle, während die Benutzervorrichtung (100) nicht in Kommunikation mit dem Netz (20) ist,
Verifizieren von Daten unter Verwendung der Authentifizierungsinformation (35), die an der Benutzervorrichtung gespeichert ist, wobei die Daten in Verbindung mit einer Anfrage nach einem Zugriff auf die Benutzervorrichtung empfangen sind, und Überprüfen der gespeicherten und aktualisierten Statusangabe (45), um zu bestimmen, ob die Authentifizierungsinformation gültig ist, und
Erlauben des Zugriffs auf die Benutzervorrichtung (100), wenn die Daten, die in Verbindung mit der Anfrage nach dem Zugriff empfangen sind, verifiziert sind und die gespeicherte Statusangabe (45), die zuletzt aktualisiert wurde, als die Benutzervorrichtung (100) in Kommunikation mit dem Netz (20) war, angibt, dass die Authentifizierungsinformation (35) gültig ist.

2. Verfahren nach Anspruch 1, wobei die Authentifizierungsinformation (35) ein Zertifikat ist.

3. Verfahrens nach einem der vorhergehenden Ansprüche, wobei das automatische Aktualisieren der Statusangabe (45) ferner Folgendes aufweist:
Übermitteln einer Anfrage nach Statusinformation für die Authentifizierungsinformation (35) an die Authentifizierungsinformationsstatusquelle (200, 210, 220) und
Aktualisieren der Statusangabe (45), wenn eine Antwort auf die Anfrage mit einer Statusinformation empfangen wird, mit der empfangenen Statusinformation.

4. Verfahren nach Anspruch 3, wobei das Aktualisieren der Statusangabe (45) periodisch mit einem ersten Zeitintervall wiederholt wird.

5. Verfahren nach Anspruch 4, wobei das Aktualisieren der Statusangabe (45) ferner Folgendes aufweist:
Reduzieren des Zeitintervalls, wenn eine Antwort auf die Anfrage nach Statusinformation nicht empfangen wird, jedes Mal, wenn eine Antwort auf eine Anfrage nicht empfangen wird, auf ein vorbestimmtes Minimalzeitintervall.

6. Verfahren nach Anspruch 5, wobei, wenn eine Antwort auf die Anfrage nach Statusinformation empfangen wird, während das Aktualisieren der Statusangabe (45) mit einem Zeitintervall wiederholt wird, das sich von dem ersten Zeitintervall unterscheidet, das Zeitintervall, mit dem das Aktualisieren periodisch wiederholt wird, auf das erste Zeitintervall erhöht wird.

7. Verfahren nach einem der Ansprüche 3 bis 6, ferner mit:
Bereitstellen des Zugriffs auf die Authentifizierungsinformationsstatusquelle (200, 210, 220), wenn die Benutzervorrichtung (100) nicht in Kommunikation mit dem Netz (20) ist,
Versuchen, eine Anfrage nach Statusinformation (45) für die Authentifizierungsinformation (35) an die Authentifizierungsinformationsstatusquelle (200, 210, 220) zu Zeitintervallen zu übermitteln, die sich auf ein vorbestimmtes Minimalzeitintervall reduzieren, bis eine Antwort auf die Anfrage nach Statusinformation empfangen wird.

8. Verfahren nach einem der vorhergehenden Ansprüche, wobei die Authentifizierungsinformation (35) Daten eines öffentlichen Schlüssels aufweist, und das Authentifizieren eines Benutzers unter Verwendung der Authentifizierungsinformation (35), die an der Benutzervorrichtung (100) gespeichert ist, ferner Folgendes aufweist:
Bereitstellen von Authentifizierungstokenmitteln (108), die Daten (55) eines privaten Schlüssels speichern,
Übermitteln einer Anforderung an die Authentifizierungstokenmittel (108),
Empfangen einer Antwort mit der Anforderung, signiert unter Verwendung der Daten (55) des privaten Schlüssels, von den Authentifizierungstokenmittel (108) und
Verifizieren der Antwort unter Verwendung der Daten des öffentlichen Schlüssels, so dass der Benutzer authentifiziert wird, wenn die Antwort verifiziert wird.

9. Verfahren nach Anspruch 8, wobei das Übermitteln an die und das Empfangen von den Authentifizierungstokenmittel (108) unter Verwendung von Zugriffsmitteln (104) in Kommunikation mit der Benutzervorrichtung (100) und den Authentifizierungstokenmittel (108) ausgeführt wird, wobei die Zugriffsmittel (104) von der Benutzervorrichtung getrennt sind.

10. Verfahren nach einem der vorhergehenden Ansprüche, wobei der Schritt des Aktualisierens nach Erlauben des Zugriffs auf die Benutzervorrichtung wiederholt wird, wobei, wenn die Statusangabe (45) aktualisiert wird, um anzugeben, dass die Authentifizierungsinformation (35), die verwendet wird, um einen Benutzer zu authentifizieren, nicht gültig ist, die Benutzervorrichtung gesperrt wird, um einen Benutzerzugriff (100) zu verhindern.

11. Verfahren nach einem der vorhergehende Ansprüche, wobei die Authentifizierungsinformation (35) gültig ist, wenn mindestens eines aus Folgendem vorliegt: (i) sie ist nicht abgelaufen, (ii) sie ist entweder auf Halten oder nicht widerrufen, und (iii) ihr wird vertraut.

12. Verfahren nach einem der vorhergehenden Ansprüche, wobei die Benutzervorrichtung (100) eine Drahtloskommunikationsvorrichtung ist.

13. Computerlesbares Medium mit Code, der von einer Computervorrichtung zum Veranlassen der Computervorrichtung ausführbar ist, das Verfahren nach einem der vorhergehenden Ansprüche auszuführen.

14. Authentifizierungssystem für eine Benutzervorrichtung (100), wobei das Authentifizierungssystem Folgendes aufweist:
Mittel (306, 309), die dazu ausgelegt sind, Authentifizierungsinformation (35) zum Authentifizieren des Benutzers der Benutzervorrichtung (100) zu speichern und eine Statusangabe (45) für eine Gültigkeit der Authentifizierungsinformation zu speichern,
Mittel (306, 309), die dazu ausgelegt sind, die Statusangabe (45) zu überprüfen, die in Verbindung mit der Authentifizierungsinformation gespeichert ist,
Mittel, die dazu ausgelegt sind, die Statusangabe (45) auf intermittierender Basis automatisch zu aktualisieren, während die Benutzervorrichtung (100) in Kommunikation mit einem Netz (20) ist, das einen Zugriff auf eine Authentifizierungsinformationsstatusquelle (200, 210, 220) bereitstellt, wobei die Mittel dazu ausgelegt sind, eine Anfrage nach Statusinformation für die Authentifizierungsinformation an eine Authentifizierungsinformationsstatusquelle intermittierend zu übermitteln, eine Antwort mit Statusinformation als Reaktion auf die Anfrage zu empfangen und die gespeicherte Statusangabe mit der empfangenen Statusinformation zu aktualisieren, und
Mittel (306, 309), die dazu ausgelegt sind, den Zugriff auf die Benutzervorrichtung (100) zu erlauben, wenn die Daten, die in Verbindung mit einer empfangenen Anfrage nach dem Zugriff empfangen sind, unter Verwendung der gespeicherten Authentifizierungsinformation verifiziert sind und bestimmt ist, dass die gespeicherte Authentifizierungsinformation gültig ist, indem die gespeicherte Statusangabe (45) überprüft wird, die zuletzt aktualisiert wurde, als die Mobilvorrichtung in Kommunikation mit dem Netz (20) war.

15. Authentifizierungssystem nach Anspruch 14, wobei die Authentifizierungsinformation (35) ein Zertifikat ist.

16. Authentifizierungssystem nach Anspruch 14 oder 15, wobei Anfragen nach Statusinformation periodisch bei Ablauf eines ersten Zeitintervalls übermittelt werden, während eine Antwort auf jede Anfrage empfangen wird, ferner mit Mitteln, die dazu ausgelegt sind, das Zeitintervall, zu dem Anfragen übermittelt werden, jedes Mal, wenn eine Antwort auf eine Anfrage nach Statusinformation nicht empfangen wird, auf ein vorbestimmtes Minimalzeitintervall zu reduzieren und das Zeitintervall auf das erste Zeitintervall zu erhöhen, sobald eine Antwort empfangen wird.

17. Authentifizierungssystem nach einem der Ansprüche 14 bis 16, ferner mit Mitteln, die dazu ausgelegt sind, die Benutzervorrichtung zu sperren, um einen Benutzerzugriff zu verhindern, wenn die gespeicherte Statusangabe aktualisiert ist, um anzugeben, dass die Authentifizierungsinformation, die verwendet wird, um den Benutzer zu authentifizieren, nicht gültig ist.

18. Authentifizierungssystem nach einem der Ansprüche 14 bis 17, ferner mit Mitteln die dazu ausgelegt sind, eine von dem Benutzer abgerufene Anfrage nach Statusinformation für die Authentifizierungsinformation an die Authentifizierungsinformationsstatusquelle auszugeben.

19. Authentifizierungssystem nach einem der Ansprüche 14 bis 18, wobei die Authentifizierungsinformation gültig ist, wenn mindestens eines aus Folgendem vorliegt: (i) sie ist nicht abgelaufen, (ii) sie ist entweder auf Halten oder nicht widerrufen, und (iii) ihr wird vertraut.

20. Authentifizierungssystem nach einem der Ansprüche 14 bis 19, wobei die Authentifizierungsinformation (35) Daten eines öffentlichen Schlüssels aufweist, und die Mittel (306, 309), die dazu ausgelegt sind, den Zugriff zu erlauben, ferner dazu ausgelegt sind, eine Anforderung an die Authentifizierungstokenmittel (108) zu übermitteln, von den Authentifizierungstokenmitteln eine Antwort mit der Anforderung, signiert unter Verwendung von Daten (55) eines privaten Schlüssels, die an den Authentifizierungstokenmitteln gespeichert sind, zu empfangen und die Antwort unter Verwendung der Daten des öffentlichen Schlüssels zu verifizieren, so dass der Benutzer authentifiziert wird, wenn die Antwort verifiziert ist und die Statusangabe angibt, dass die Authentifizierungsinformation mit den Daten des öffentlichen Schlüssels gültig ist.

21. Drahtloskommunikationsvorrichtung mit dem Authentifizierungssystem nach einem der Ansprüche 14 bis 20.

## Revendications

1. Procédé d'authentification d'un utilisateur sur un dispositif d'utilisateur (100), le procédé comprenant les étapes consistant à :
enregistrer sur le dispositif d'utilisateur des informations d'authentification (35) et un indicateur d'état (45) indiquant une validité desdites informations d'authentification (35) ;
mettre automatiquement à jour l'indicateur d'état (45) de manière intermittente alors que le dispositif d'utilisateur (100) est en communication avec un réseau (20) donnant accès à une source d'états d'informations d'authentification (200, 210, 220) ;
alors que le dispositif d'utilisateur (100) n'est pas en communication avec le réseau (20), donner accès à la source d'états d'informations d'authentification ;
vérifier, à l'aide des informations d'authentification (35) enregistrées sur le dispositif d'utilisateur, des données reçues en association avec une demande d'accès au dispositif d'utilisateur et contrôler ledit indicateur d'état (45) enregistré et mis à jour afin de déterminer si les informations d'authentification sont valides ; et
autoriser l'accès au dispositif d'utilisateur (100) si les données reçues en association avec la demande d'accès sont vérifiées et si ledit indicateur d'état (45) enregistré, dernièrement mis à jour alors que le dispositif d'utilisateur (100) était en communication avec le réseau (20), indique que les informations d'authentification (35) sont valides.

2. Procédé selon la revendication 1, dans lequel les informations d'authentification (35) sont constituées d'un certificat.

3. Procédé selon l'une quelconque des revendications précédentes, dans lequel l'étape de mise à jour automatique de l'indicateur d'état (45) comprend en outre les étapes consistant à :
transmettre une demande d'informations d'état pour les informations d'authentification (35) à la source d'états d'informations d'authentification (200, 210, 220) ; et
si une réponse comprenant des informations d'état est reçue après la demande, mettre à jour l'indicateur d'état (45) à l'aide des informations d'état reçues.

4. Procédé selon la revendication 3, dans lequel l'étape de mise à jour de l'indicateur d'état (45) est répétée périodiquement selon un premier intervalle de temps.

5. Procédé selon la revendication 4, dans lequel l'étape de mise à jour de l'indicateur d'état (45) comprend en outre l'étape consistant à :
si une réponse n'est pas reçue à la demande d'informations d'état, réduire l'intervalle de temps à chaque fois qu'une réponse à une demande n'est pas reçue dans un intervalle de temps minimal prédéterminé.

6. Procédé selon la revendication 5, dans lequel, si une réponse à la demande d'informations d'état est reçue alors que la mise à jour de l'indicateur d'état (45) est répétée selon un intervalle de temps autre que le premier intervalle de temps, une augmentation de l'intervalle de temps selon lequel ladite mise à jour est effectuée est répétée périodiquement jusqu'au premier intervalle de temps.

7. Procédé selon l'une quelconque des revendications 3 à 6, comprenant en outre les étapes consistant à :
si le dispositif d'utilisateur (100) n'est pas en communication avec le réseau (20), donner accès à la source d'états d'informations d'authentification (200, 210, 220) ;
tenter de transmettre une demande d'informations d'état (45) pour les informations d'authentification (35) à la source d'états d'informations d'authentification (200, 210, 220) selon des intervalles de temps qui se réduisent jusqu'à un intervalle de temps minimal prédéterminé, jusqu'à ce qu'une réponse soit reçue à la demande d'informations d'état.

8. Procédé selon l'une quelconque des revendications précédentes, dans lequel les informations d'authentification (35) comprennent des données de clef publique et l'étape d'authentification d'un utilisateur à l'aide des informations d'authentification (35) enregistrées sur le dispositif d'utilisateur (100) comprend en outre les étapes consistant à :
fournir un moyen de jeton d'authentification (108) qui porte enregistrées des données de clef privée (55) ;
transmettre un défi au moyen de jeton d'authentification (108) ;
recevoir du moyen de jeton d'authentification (108) une réponse comprenant le défi signé à l'aide des données de clef privée (55) ; et
vérifier la réponse à l'aide des données de clef publique, si bien que l'utilisateur est authentifié si la réponse est vérifiée.

9. Procédé selon la revendication 8, dans lequel les étapes de transmission et de réception en provenance du moyen de jeton d'authentification (108) sont exécutées à l'aide d'un moyen d'accès (104) qui est en communication avec le dispositif d'utilisateur (100) et avec le moyen de jeton d'authentification (108), dans lequel le moyen d'accès (104) est séparé du dispositif d'utilisateur.

10. Procédé selon l'une quelconque des revendications précédentes, dans lequel l'étape de mise à jour est répétée après avoir donné accès au dispositif d'utilisateur, dans lequel, si l'indicateur d'état (45) est mis à jour en indiquant que les informations d'authentification (35) utilisées pour authentifier un utilisateur ne sont pas valides, le dispositif d'utilisateur (100) est verrouillé afin d'empêcher l'accès par l'utilisateur.

11. Procédé selon l'une quelconque des revendications précédentes, dans lequel les informations d'authentification (35) sont valides si au moins un des critères suivants est satisfait : (i) informations non expirées, (ii) informations en attente ou non révoquées, (iii) informations de confiance.

12. Procédé selon la revendication 1, dans lequel le dispositif d'utilisateur (100) est un dispositif de communication sans fil.

13. Support lisible par ordinateur comprenant du code exécutable par un dispositif informatique afin de commander audit dispositif informatique d'exécuter le procédé selon l'une quelconque des revendications précédentes.

14. Système d'authentification pour un dispositif d'utilisateur (100), le système d'authentification comprenant :
un moyen (306, 309) conçu pour enregistrer des informations d'authentification (35) afin d'authentifier l'utilisateur sur le dispositif d'utilisateur et pour enregistrer un indicateur d'état (45) qui indique une validité desdites informations d'authentification ;
un moyen (306, 309) conçu pour vérifier l'indicateur d'état (45) enregistré en association avec les informations d'authentification ;
un moyen conçu pour mettre automatiquement à jour l'indicateur d'état (45) de manière intermittente alors que le dispositif d'utilisateur (100) est en communication avec un réseau (20) donnant accès à une source d'états d'informations d'authentification (200, 210, 220), ledit moyen étant conçu pour transmettre de manière intermittente une demande d'informations d'état sur les informations d'authentification à une source d'états d'informations d'authentification, pour recevoir une réponse comprenant des informations d'état en réponse à la demande et pour mettre à jour l'indicateur d'état enregistré à l'aide des informations d'état reçues ; et
un moyen (306, 309) conçu pour autoriser l'accès au dispositif d'utilisateur (100) si des données reçues en association avec une demande d'accès reçue sont vérifiées à l'aide des informations d'authentification enregistrées et s'il est déterminé que lesdites informations d'authentification sont valides en contrôlant l'indicateur d'état (45) enregistré, dernièrement mis à jour alors que le dispositif d'utilisateur (100) était en communication avec le réseau (20).

15. Système d'authentification selon la revendication 14, dans lequel les informations d'authentification (35) sont constituées d'un certificat.

16. Système d'authentification selon la revendication 14 ou la revendication 15, dans lequel des demandes d'informations d'état sont transmises périodiquement à l'expiration d'un premier intervalle de temps tant qu'une réponse est reçue à chaque demande et comprenant en outre un moyen conçu pour réduire l'intervalle de temps selon lequel les demandes sont transmises à chaque fois qu'une réponse à une demande d'informations d'état n'est pas reçue dans un intervalle de temps minimal prédéterminé et pour augmenter l'intervalle de temps en le portant au premier intervalle de temps lorsqu'une réponse est reçue.

17. Système d'authentification selon l'une quelconque des revendications 14 à 16, comprenant en outre un moyen conçu pour verrouiller le dispositif d'utilisateur afin d'empêcher l'accès de l'utilisateur si l'indicateur d'état enregistré est mis à jour et indique que les informations d'authentification utilisées pour authentifier l'utilisateur ne sont pas valides.

18. Système d'authentification selon l'une quelconque des revendications 14 à 17, comprenant en outre un moyen conçu pour envoyer une demande appelée par l'utilisateur pour obtenir des informations d'état intéressant les informations d'authentification auprès de la source d'états d'informations d'authentification.

19. Système d'authentification selon l'une quelconque des revendications 14 à 18, dans lequel les informations d'authentification sont valides si au moins un des critères suivants est satisfait : (i) informations non expirées, (ii) informations en attente ou non révoquées, (iii) informations de confiance.

20. Système d'authentification selon l'une quelconque des revendications 14 à 19, dans lequel les informations d'authentification (35) comprennent des données de clef publique et le moyen (306, 309) conçu pour donner accès est en outre conçu pour émettre un défi vers un moyen de jeton d'authentification (108), pour recevoir du moyen de jeton d'authentification une réponse contenant le défi signé à l'aide de données de clef privée (55) stockées dans le moyen de jeton d'authentification et pour vérifier la réponse à l'aide des données de clef publique, si bien que l'utilisateur est authentifié si la réponse est vérifiée et si l'indicateur d'état indique que les informations d'authentification comprenant les données de clef publique sont valides.

21. Dispositif de communication sans fil comprenant le système d'authentification selon l'une quelconque des revendications 14 à 20.
